# EUROPÄISCHE PATENTSCHRIFT

(11) **EP 1 361 384 B1**
(45) Veröffentlichungstag und Bekanntmachung des Hinweises auf die Patenterteilung: **15.06.2005**
(21) Anmeldenummer: 03010167.9
(22) Anmeldetag: 06.05.2003
(51) Int. Cl.: F16L 3/16, F16L 3/26, F16L 27/08, B25J 19/00

(54) **Schutzschlauch zur Aufnahme von Leitungen**
Protective hose for accommodating conduits
Tuyau flexible de protection pour le logement des conduites

(30) Priorität: 07.05.2002 DE 10220495; 10.07.2002 DE 10231289
(43) Veröffentlichungstag der Anmeldung: 12.11.2003
(73) Patentinhaber: Delectric Elektrobedarf GmbH & Co. Kommanditgesellschaft, 40591 Düsseldorf (DE)
(72) Erfinder: Balovnev, Sergej, 40237 Düsseldorf (DE)
(74) Vertreter: Kreuzkamp, Markus

(56) Entgegenhaltungen:
- DE-A- 19 927 938
- US-A- 3 239 249
- US-A- 4 705 243
- US-A1- 2002 043 803
- US-B1- 6 230 859

## Beschreibung

Die Erfindung bezieht sich auf einen Schutzschlauch mit darin liegenden Leitungen für Industrieroboter. Ein solcher Schutzschlauch mit darin liegenden Leitungen, die zur Versorgung eines Werkzeuges, das von dem Industrieroboter getragen wird, dienen, wird auch als Schlauchpaket bezeichnet. Die in dem Schutzschlauch liegenden Leitungen umfassen beispielsweise die Stromversorgung für ein Werkzeug, beispielsweise ein Punktschweißwerkzeug, wie Steuerungskabel, Luftleitungen, Hydraulikleitungen und Kühlwasserleitungen.

Der Schutzschlauch dient dazu, die in ihm verlaufenden Leitungen zusammenzuhalten, so daß diese die Bewegungen des Industrieroboters nicht wesentlich beeinträchtigen bzw. den Raumbedarf des Industrieroboters nicht übermäßig vergrößern, andererseits auch als mechanischer Schutz der in dem Schutzschlauch geführten Leitungen.

Bei einem Industrieroboter bewegen sich die Armglieder des Roboters gegeneinander durch Verschwenken, axiale Rotationsbewegungen und/oder Verschieben gegeneinander, um das von dem Roboter getragene Werkzeug in verschiedene Positionen zu bringen. Der Schutzschlauch mit den darin liegenden Leitungen muß den Bewegungen der Armglieder des Roboters folgen, um eine Verbindung zu dem Werkzeug zu gewährleisten.

Es hat sich herausgestellt, daß die mechanische Belastung des Schutzschlauches und der darin liegenden Leitungen durch die Bewegungen der einzelnen Armglieder des Roboters dazu führt, daß der Schutzschlauch und auch die innenliegenden Leitungen abgerissen werden oder brechen. Zur Minderung der mechanischen Belastung des Schutzschlauches und der darin liegenden Leitungen werden bisher sogenannte Protektoren auf dem Schutzschlauch aufgebracht, die die Form von kurzen Hülsen oder Ringen haben. Weiterhin wird der Schutzschlauch an einzelnen Punkten entlang der Armglieder befestigt, beispielsweise mit Befestigungsvorrichtungen, die Rohrschellen ähnlich sind oder kurzen Rohrstücken mit aufgeweiteten Endstücken, die den Schutzschlauch umgeben und dann die Armglieder fixieren. In den Übergangsbereichen der Armglieder, d.h. im Bereich der beweglichen Gelenke der Armglieder, wird der Schutzschlauch und entsprechend die darin liegenden Leitungen im Bogen geführt, um den Schutzschlauch und den Leitungen Raum zum Nachvollziehen der Bewegung der Armglieder durch Biegung zu geben.

Es ist bekannt, durch feste definierte Haltepunkte, wie sie durch Befestigungsvorrichtungen ähnlich Schlauchschellen gebildet werden, den Schutzschlauch eng an den beweglichen Armgliedern zu führen. Eine weitere Ausgestaltung der möglichst günstigen Führung des Schutzschlauches an den beweglichen Armgliedern eines Roboters entlang besteht darin, den Schutzschlauch möglichst dicht entlang der Bewegungsachse der Armglieder zu führen. Dies wird beispielsweise dadurch erreicht, daß der Schutzschlauch abschnittsweise durch die Armglieder des Roboters selbst geführt wird.

Eine weitere bekannte Abhilfe, um dem vorzeitigen Brechen der Leitungen oder des Schutzschlauches vorzubeugen besteht darin, den Schutzschlauch in einer mechanischen Nachführeinrichtung zu halten, die es bei einer Zugbeanspruchung auf die Leitungen bzw. den Schutzschlauch erlaubt, daß der Schutzschlauch mitgezogen wird, beispielsweise wenn das Werkzeug ausgefahren wird, der Schutzschlauch jedoch bei Nachlassen der Zugbelastung wieder zurückgeholt wird, um ein Durchhängen und Knicken zu vermeiden.

Eine gattungsbildende Patentschrift US 6230859B zeigt einen Schutzschlauch für einen Industrieroboter. Der Schlauch ist in zwei Abschnitte unterteilt, die miteinander drehbar verbunden sind.

Es ist Aufgabe der vorliegenden Erfindung, einen Schutzschlauch zur Aufnahme von Leitungen bereitzustellen, der Bestandteil eines Schlauchpaketes für Industrieroboter sein kann, der eine verbesserte Haltbarkeit an sich gegeneinander bewegenden Armgliedern eines Roboters aufweist.

Die erfindungsgemäße Lösung liegt darin, einen Schutzschlauch zur Aufnahme von Leitungen bereitzustellen, der zur Herstellung eines Schlauchpaketes zur Anwendung an einem Industrieroboter geeignet ist, wobei mindestens einer der Schlauchabschnitte an seinen beiden Enden axial drehbar gelagert ist, so dass die Leitungen bei Bewegung der Armglieder im wesentlichen nicht verdreht werden.

In einer weiteren Ausführungsform ist der Schutzschlauch von einem Manschettenbauteil umgeben, beispielsweise einem außerhalb aufliegenden Rohrabschnitt, dessen Enden einen sich vergrößernden Durchmesser aufweisen und der Schutzschlauch in dem Manschettenbauteil unterbrochen ist, so daß zwei angrenzende Schlauchabschnittsenden entstehen und mindestens eines dieser Schlauchabschnittsenden axial drehbar in dem Manschettenbauteil gelagert ist.

In einer bevorzugten Ausführungsform weist der Schutzschlauch eine Unterbrechung in Form zweier angrenzender Schlauchabschnittsenden auf, ist in diesem Bereich von dem Manschettenbauteil umgeben und beide angrenzenden Schlauchabschnittsenden sind voneinander unabhängig axial drehbar in dem Manschettenbauteil gelagert. Eine derartige Lagerung kann durch Wälzlager, beispielsweise Kugellager, Rillenkugellager, Nadellager oder Walzenlager, die axiale und/oder radiale Lasten aufnehmen, erfolgen, die in dem Manschettenbauteil angeordnet sind und die Schlauchabschnittsenden umgeben. Die Schlauchabschnittsenden können auch von einer Endhülse umfaßt sein, die in dem Wälzlager, das in dem Manschettenbauteil angeordnet ist, gelagert ist.

Der erfindungsgemäße Schutzschlauch ermöglicht die Entlastung des Schutzschlauches von Torsionsspannungen, die dadurch auftreten, daß der Schutzschlauch den Bewegungen der Armglieder eines Industrieroboters folgt. Durch diese Entlastungsfunktion des erfindungsgemäßen Schutzschlauches wird auch eine Entlastung der darin geführten Leitungen von Zug-und/oder Torsionsspannungen erreicht, so daß sowohl der erfindungsgemäße Schutzschlauch selbst als auch die darin geführten Leitungen gegenüber herkömmlichen Schlauchpaketen eine längere Lebensdauer aufweisen.

Zur Festlegung eines Schlauchpaketes mit einem erfindungsgemäßen Schutzschlauch zur Aufnahme von Leitungen können mehrere Ausführungsformen verwendet werden. In einer ersten Ausführungsform weist der Schutzschlauch zur Aufnahme von Leitungen mindestens eine Vorrichtung zur örtlichen Befestigung an gegeneinander beweglichen Armgliedern, beispielsweise eines Industrieroboters, auf, wobei der Schutzschlauch in dieser mindestens einen Vorrichtung zur örtlichen Befestigung drehbar gelagert ist. Eine solche Vorrichtung zur örtlichen Befestigung kann ein Manschettenbauteil sein, das den Schutzschlauch in einem Bereich umgibt. Eine Ausgestaltung dieser Ausführungsform sieht vor, daß der Schutzschlauch in der mindestens einen Vorrichtung zur örtlichen Befestigung, beispielsweise einem Manschettenbauteil, jeweils eine Unterbrechung aufweist, in welcher sich zwei Schlauchabschnittsenden gegenüberliegen und mindestens eines der Schlauchabschnittsenden in der Vorrichtung zur örtlichen Befestigung axial drehbar gelagert ist. Eine weitere bevorzugte Ausgestaltung sieht vor, daß beide sich in der Unterbrechung gegenüberliegenden Schlauchabschnittsenden jeweils unabhängig voneinander axial drehbar in dem Manschettenbauteil gelagert sind.

In einer weiteren Ausführungsform der vorliegenden Erfindung ist der Schutzschlauch zur Aufnahme von Leitungen mit mindestens einer Vorrichtung zur örtlichen Befestigung an gegeneinander beweglichen Armgliedern, beispielsweise eines Industrieroboters befestigt, wobei der Schutzschlauch in einem von der Vorrichtung zur örtlichen Befestigung beabstandeten Bereich eine Unterbrechung aufweist. Diese Unterbrechung wird von zwei angrenzenden Schlauchabschnittsenden, die sich gegenüberliegen, gebildet und ist von einem axial angeordneten Manschettenbauteil umgeben, wobei mindestens eines der angrenzenden Schlauchabschnittsenden axial drehbar in dem Manschettenbauteil gelagert ist. In einer weiteren Ausgestaltung dieser Ausführungsform sind die beiden angrenzenden Schlauchabschnittsenden, die von dem Manschettenbauteil umgeben sind, unabhängig voneinander axial drehbar in dem Manschettenbauteil gelagert.

In einer weiteren Ausführungsform umfaßt der erfindungsgemäße Schutzschlauch ein Manschettenbauteil, in dem er sowohl axial drehbar als auch in Richtung der Achse beweglich gelagert ist Ein solches Manschettenbauteil ist an einem Armglied eines Industrieroboters befestigt, und der Schutzschlauch wird in dem Manschettenbauteil drehbar und in Längsrichtung verschiebbar gehalten. Für diese Lagerung sind Längsführungen geeignet, die den Schutzschlauch zumindest teilweise umfänglich umfassen, wie beispielsweise Flachführungen, insbesondere Kugelführungen, die aus einer Außenbuchse, einem Käfig mit Kugeln und einer Innenbuchse bestehen. Solche Kugelführungen können anstelle einer Außenbuchse auch direkt in dem Manschettenbauteil enthalten sein, der Schlauch kann auch ohne Innenbuchse direkt auf den Kugeln gelagert sein. Als weitere Längsführung kann eine Kugelhülse an drei oder mehr Kugelrillen mit Rückführung bestehen. Weiterhin geeignet sind Rollenführungen, mit zum Beispiel leiterförmigen Flachkäfigen oder in Form eines Rollenumlaufschuhs. Eine einfache Form dieser Ausführungsform besteht darin, daß das Manschettenbauteil ein Kugellager mit so großem Innenquerschnitt aufweist, in welchem der Schutzschlauch in Längsrichtung beweglich ist und daher verschiebbar gehalten wird. Einen besonderen Vorteil bietet diese Art der drehbaren Lagerung in einem Manschettenbauteil, wenn der Schutzschlauch durch eine Rückholfeder so unter Spannung gehalten wird, daß die Rückholfeder den Schutzschlauch in die von dem Werkzeug wegweisende Richtung zieht, so daß der Schutzschlauch diesem Zug durch Bewegung in der Längsführung folgen kann, wobei er auch durch axiale Drehung der Bewegung des Werkzeuges folgen kann. Diese Art der Lagerung wird vorteilhafterweise mit der Ausführungsform des erfindungsgemäßen Schutzschlauches kombiniert, bei der der Schutzschlauch ein Manschettenbauteil aufweist, das nicht unmittelbar an einem Armglied des Roboters befestigt ist, in welchem Manschettenbauteil der Schutzschlauch eine Unterbrechung aufweist, deren sich gegenüberliegende Schlauchabschnittsenden jeweils unabhängig voneinander axial drehbar in dem Manschettenbauteil gelagert sind. Dies ist bereits dadurch möglich, daß nur ein Schlauchabschnittsende in dem Manschettenbauteil in einem Wälzlager geführt wird, während das gegenüberliegende Schlauchabschnittsende mit dem Manschettenbauteil verbunden ist.

Ein besonderer Vorteil des vorliegenden Schutzschlauches ist es, daß ein Schlauchpaket, welches einen erfindungsgemäßen Schutzschlauch und darin geführte Leitungen aufweist, den Bewegungen der Armglieder folgt, ohne daß die in dem Schutzschlauch geführten Leitungen eine Torsion durch die Bewegung der Armglieder erfahren.

Der erfindungsgemäße Schutzschlauch ermöglicht es, daß der Schutzschlauch wegen seiner örtlichen Befestigung an den beweglichen Armgliedern des Industrieroboters der Bewegung dieser Armglieder folgt, wobei jedoch der Schutzschlauch keine Torsionsspannungen aufnimmt. Der Schutzschlauch bleibt insbesondere dann von Torsionsspannungen, die durch die Bewegung der Armglieder eines Industrieroboters gegeneinander erzeugt werden frei, wenn der Schutzschlauch in so viele Abschnitte unterteilt wird, wie das Werkzeug Freiheitsgrade der Bewegung, beispielsweise Rotationsachsen aufweist.

Als ein weiterer Vorteil des erfindungsgemäßen Schutzschlauches ist es anzusehen, daß Unterbrechungen des Schutzschlauches, die beispielsweise durch Beschädigungen hervorgerufen werden, oder durch Verwenden mehrerer Schlauchstücke erzeugt werden, durch einfache Manschettenbauteile überbrückt werden können. Solche Manschettenbauteile brauchen keine große mechanische Spannung zu übertragen und können daher als Manschetten ausgeführt werden, die die beiden Schlauchabschnittsenden, die die Unterbrechung bilden, bereichsweise umfassen und beispielsweise einklemmen. Als derartige Manschettenbauteile lassen sich die im Stand der Technik bekannten Protektoren verwenden.

Mit dem erfindungsgemäßen Schutzschlauch lassen sich Schutzschläuche von Schlauehpaketen in aneinandergereihte Schlauchabschnitte unterteilen, wobei die Schlauchabschnitte jeweils gegeneinander axial drehbar sind. Insbesondere bei Verwendung von Manschettenbauteilen, die für beide sich gegenüberliegenden Schlauchabschnittsenden jeweils eine Lagerung in einem Wälzlager vorsehen, ist eine einfachere Reparatur des beschädigten Schutzschlauches durch Austausch des betreffenden Schlauchabschnittes möglich. Denn durch den gleichen Aufbau der Manschettenbauteile, die die jeweiligen Schlauchabschnittsenden miteinander axial drehbar verbinden, können zumindest bestimmte Schlauchabschnitte gleiche Manschettenbauteile an ihren Enden aufweisen, so daß diese einfach ersetzt werden können, wobei die Ausrichtung des Schlauchabschnitts unberücksichtigt bleiben kann.

Für Reparaturzwecke können bei erfindungsgemäßen Schutzschläuchen einzelne Schlauchabschnitte durch ein neues Stück Schlauch ersetzt werden. Zum Ersetzen von Schlauchabschnitten sind dabei Schlauchstücke bevorzugt, die in ihrer Längsrichtung eine Unterbrechung aufweisen, wie zum Beispiel einen Schlitz entlang ihrer Längsachse oder einen spiralförmigen Schlitz. Schlauchstücke mit einer solchen Unterbrechung lassen sich seitlich auf die Leitungen aufschieben, die von dem Schutzschlauch umgeben werden sollen, so daß ein Austausch von Bereichen der Schlauchabschnitte möglich ist, ohne daß ein Schlauchstück in Längsrichtung über die in dem Schlauchpaket geführten Leitungen geführt werden muß, d. h. ohne daß das Ende der in dem Schlauchpaket geführten Leitungen zugänglich oder passiert werden muß.

Die Schlauchstücke mit Unterbrechung in Längsrichtung können die gesamte Länge eines Schlauchabschnittes zwischen den Bereichen eines Schutzschlauches aufweisen, an den der Schutzschlauch beispielsweise in einem Wälzlager gelagert ist. Es ist jedoch auch möglich, nur einen Unterabschnitt eines Schlauchabschnittes durch ein Schlauchstück zu ersetzen, das eine Unterbrechung in Längsrichtung aufweist. Das Schlauchstück, das die Unterbrechung in Längsrichtung aufweist, wird durch beabstandete Manschetten zusammengehalten, so daß die in dem Schlauchpaket geführten Leitungen nicht aus der Unterbrechung herausragen oder durch die Unterbrechung unmittelbar zugänglich sind. Derartige Manschetten umfassen das Schlauchstück mit der Unterbrechung in Längsrichtung bereichsweise. Als derartige Manschetten lassen sich die bekannten Protektoren einsetzen. In dem Falle, wenn das Schlauchstück nur einen Teil des Schlauchabschnittes ersetzen soll, der sich zwischen zwei Punkten befindet, an denen einen Schlauchabschnitt ortsfest an einem Armglied eines Roboters befestigt ist. beispielsweise jeweils mit Lagerung in einem Wälzlager, kann das Schlauchstück mit einer Unterbrechung in Längsrichtung ebenfalls mit Manschetten an Bereiche des in Umfangsrichtung geschlossenen Schutzschlauches angebunden werden. In besonders bevorzugter Ausführungsform weist der erfindungsgemäße Schutzschlauch 10 eine Oberfläche auf, die ein Eingreifen der Manschette 13 in Obertlächenbereiche des Schutzschlauches 10 möglich, wie beispielsweise radial umlaufende Rillen, mit denen sich die innere Oberfläche der Manschette 13 verzahnen kann.

Die Wirkung des erfindungsgemäßen Schutzschlauches auf die in ihm enthaltenen Leitungen dahingehend, daß der Schutzschlauch der Bewegung der Armglieder eines Industrieroboters folgt, die Leitungen jedoch nicht oder in beträchtlich geringerem Ausmaß als mit bekannten Schutzschläuchen von Schlauchpaketen durch die Bewegung der Armglieder des Roboters verdreht werden, ist insofern überraschend, als die Armglieder des Industrieroboters selbst gegeneinander verdreht werden können oder die Armglieder sich um Achsen in mehr als einer Dimension verschwenken. So treten bei bekannten Schutzschläuchen, die in Schlauchpaketen Leitungen aufnehmen, im Verlaufe der Bewegung der Armglieder eines Roboters Zug-und/oder Torsionsspannungen auf, die sowohl den Schutzschlauch als auch die in ihm geführten Leitungen zerstören.

Der erfindungsgemäße Schutzschlauch ermöglicht daher die Herstellung von Schlauchpaketen, mit denen ein Industrieroboter unterbrechungsfrei eine größere Anzahl von Bewegungen seiner Armglieder ausführen kann, wenn einem Werkzeug, das der Roboter trägt, Leitungen zugeführt werden. Der Aufbau des erfindungsgemäßen Schutzschlauches in Schlauchabschnitte ermöglicht die schnelle Reparatur beschädigter Bereiche durch Austausch des beschädigten Schlauchabschnittes oder durch Verwendung zusätzlicher Manschettenbauteile, mit oder auch ohne axial drehbare Lagerung der Schlauchabschnittsenden.

Die Unterteilung des Schutzschlauches durch Manschettenbauteile, in denen die sich gegenüberliegenden Schlauchabschnittsenden axial drehbar gelagert sind, führt zu einer schnellen Austauschmöglichkeit beschädigter Schlauchabschnitte durch gleiche Schlauchabschnitte, da beide Schlauchabschnittsenden in gleichen Manschettenbauteilen axial drehbar gelagert sind.

Die Erfindung wird nun mit Bezug auf die Figuren näher beschrieben.

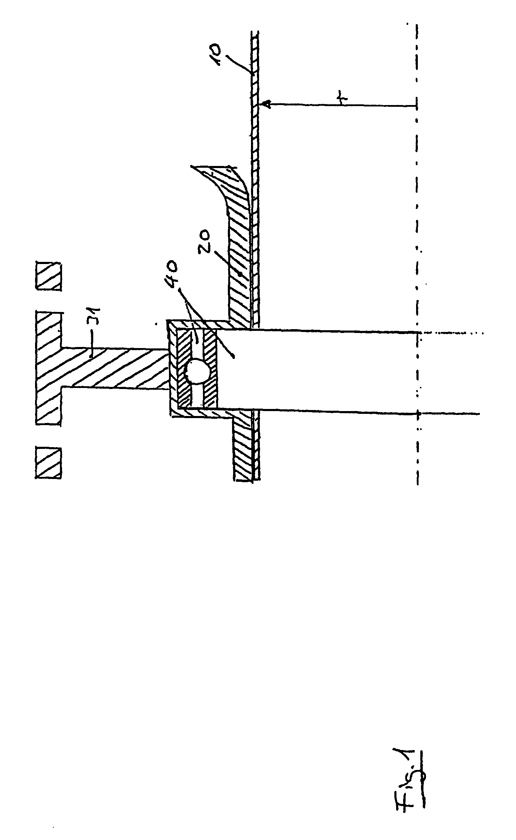

Figur 1 zeigt eine Schnittansicht eines erfindungsgemäßen Schutzschlauches 10 mit dem Radius r, der von einem Manschettenbauteil 20 umfaßt ist. In dem Schutzschlauch 10 verlaufen Leitungen, die nicht dargestellt sind. Das Manschettenbauteil 20 ist mit einer Montagevorrichtung 31 an einem Armglied (nicht gezeigt) eines Roboters befestigt. In einer Ausnehmung des Manschettenbauteiles 20 ist ein Kugellager 40 angeordnet, in welchem der Schutzschlauch 10 verläuft.

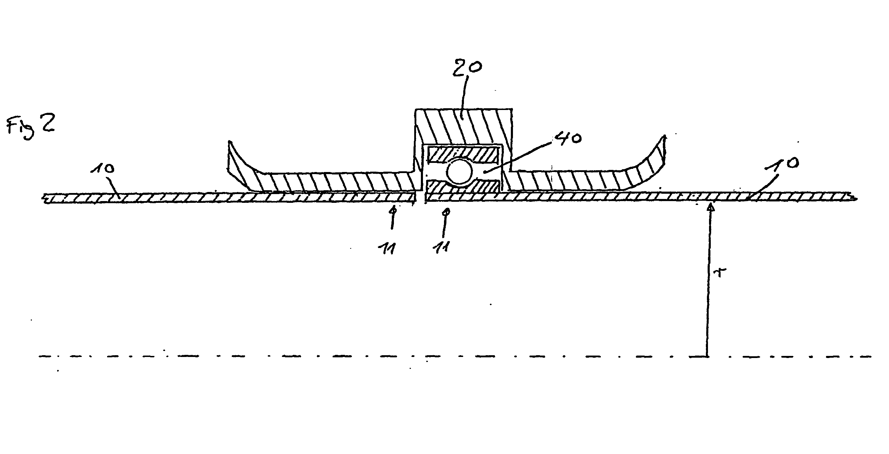

Figur 2 zeigt eine Schnittansicht einer weiteren Ausführungsform der vorliegenden Erfindung, wobei ein Schutzschlauch 10 mit dem Radius r unterbrochen ist, so daß sich die Schlauchabschnittsenden 11 gegenüberliegen. Das Manschettenbauteil 20 umgibt den Schutzschlauch 10 und weist ein Kugellager 40 auf, in welchem der Schutzschlauch 10 axial drehbar mit seinem Schlauchabschnittsende 11 gelagert ist. Hier ist dargestellt, daß nur eines der sich gegenüberliegenden Schlauchabschnittsenden 11 in einem Kugellager 40, das in dem Manschettenbauteil 20 enthalten ist, axial drehbar gelagert ist. Diese Ausführungsform ist sowohl zur Befestigung an einem Armglied eines Roboters geeignet, als auch im Zusammenwirken mit unabhängigen zusätzlichen beabstandeten Befestigungsvorrichtungen für einen Schutzschlauch, in denen der Schutzschlauch nicht drehbar gelagert ist.

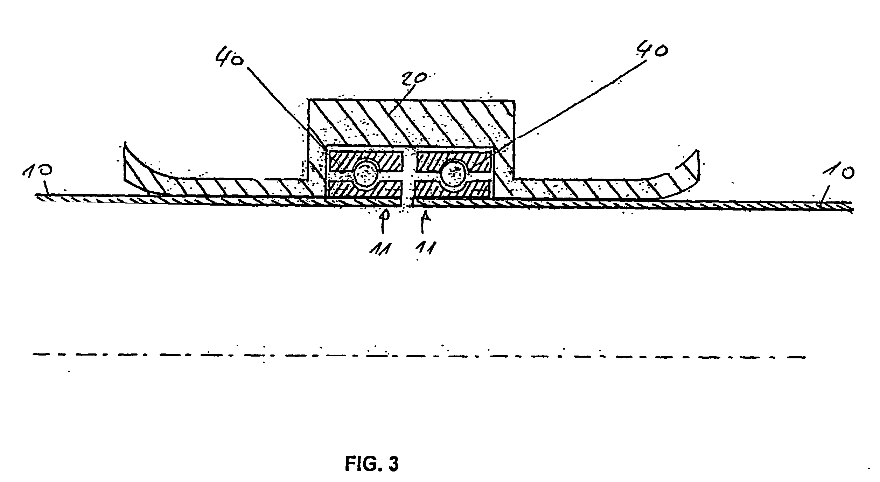

Figur 3 zeigt eine Schnittansicht einer weiteren Ausführungsform der vorliegenden Erfindung, wobei ein Schutzschlauch 10 unterbrochen ist, so daß sich die Schlauchabschnittsenden 11 gegenüberliegen. Das Manschettenbauteil 20 umgibt den Schutzschlauch 10 und weist ein Kugellager 40 auf, in welchem der Schutzschlauch 10 axial drehbar mit seinem Schlauchabschnittsende 11 gelagert ist. Hier ist dargestellt, daß auch das gegenüberliegende Schlauchabschnittsende 11 in einem Kugellager 40, das in dem Manschettenbauteil 20 enthalten ist, axial drehbar gelagert ist. Die sich gegenüberliegenden Schlauchabschnittsenden 11 sind unabhängig von einander axial drehbar in dem Manschettenbauteil 20 gelagert. Diese Ausführungsform ist sowohl zur Befestigung an einem Armglied eines Roboters geeignet, als auch im Zusammenwirken mit unabhängigen zusätzlichen beabstandeten Befestigungsvorrichtungen für einen Schutzschlauch, in denen der Schutzschlauch nicht drehbar gelagert ist.

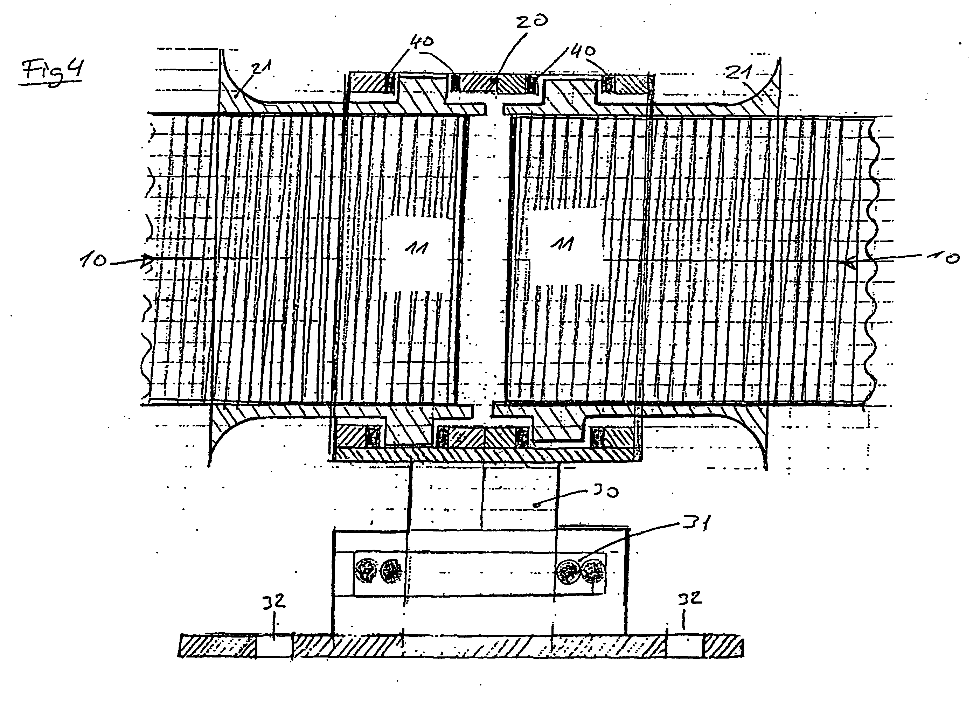

Figur 4 zeigt eine weitere Ausführungsform des erfindungsgemäßen Schutzschlauches 10, der einen Bereich der Unterbrechung, die von dem einander gegenüberliegenden Schlauchabschnittsenden 11 gebildet wird, von einem Manschettenbauteil 20 umfaßt wird. Die Schlauchabschnittsenden 11 sind jeweils von einer Endhülse 21 umgeben. Die Endhülsen 21 wiederum sind innerhalb des Manschettenbauteiles 20 in Wälzlagern 40 geführt, so daß sich das Schlauchabschnittsende 11 mit der aufgesetzten Endhülse 21 gegenüber dem Manschettenbauteil 20 in dem Wälzlager 40 unabhängig von dem angrenzenden Schlauchabschnittsende mit dessen zugehöriger Endhülse 21 frei axial drehen kann. Für diese Ausführungsform sind sowohl Axialrillenkugellager als auch Radialkugellager geeignet, die die Zugkräfte aus dem Schutzschlauch aufnehmen können. Als Option ist eine Haltevorrichtung 30 dargestellt, die der Montage des Manschettenbauteiles 20 beispielsweise an einem Armglied eines Industrieroboters dient. Die Haltevorrichtung 30 weist ein eigenes Wälzlager 31 auf, in dem die Haltevorrichtung 30 axial drehbar gelagert ist. Die Bohrungen 32 dienen der Befestigung an einem Armglied eines Industrieroboters. Diese Ausführungsform ist sowohl zur Befestigung an einem Armglied eines Roboters geeignet, als auch ohne die Befestigungsvorrichtung 30 im Zusammenwirken mit unabhängigen zusätzlichen beabstandeten Befestigungsvorrichtungen für einen Schutzschlauch, in denen der Schutzschlauch nicht drehbar gelagert ist.

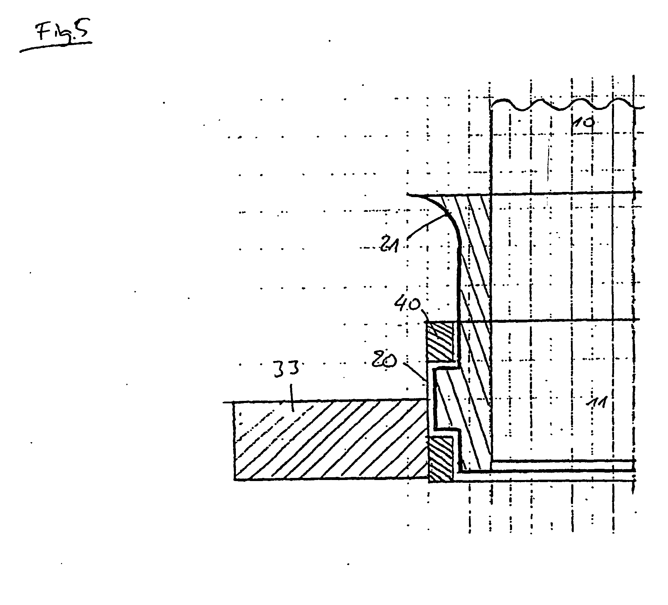

Figur 5 zeigt das Ende eines Schutzschlauches 10, mit dem dieser in Richtung des Werkzeuges, das von einem Industrieroboter getragen wird, endet und die in ihn geführten Leitungen freigibt, welche nun ohne Schutzschlauch fortgeführt werden, um mit dem Werkzeug verbunden zu werden. Die Manschettenvorrichtung 20 weist ein Wälzlager 40 auf, welches sowohl axiale als auch radiale Belastungen aufnimmt, in dem die Endhülse 21 axial drehbar geführt wird. Als Wälzlager 40 sind hier z.B. eine doppelseitige oder zwei einseitig wirkende Axialrillenkugellager geeignet, jedoch auch ein Radialrillenkugellager. Die Endhülse 21 umgibt das Schlauchabschnittsende 11 des Schutzschlauches 10. Das Manschettenbauteil 20 ist fest mit einer Aufnahmeplatte für ein Werkzeug verbunden, einer sogenannten Dockingplatte 33. Die Leitungen, die in dem Schutzschlauch 10 geführt werden, können nun durch die Dockingplatte 33 und aus dem Schutzschlauch 10 hinausgeführt werden.

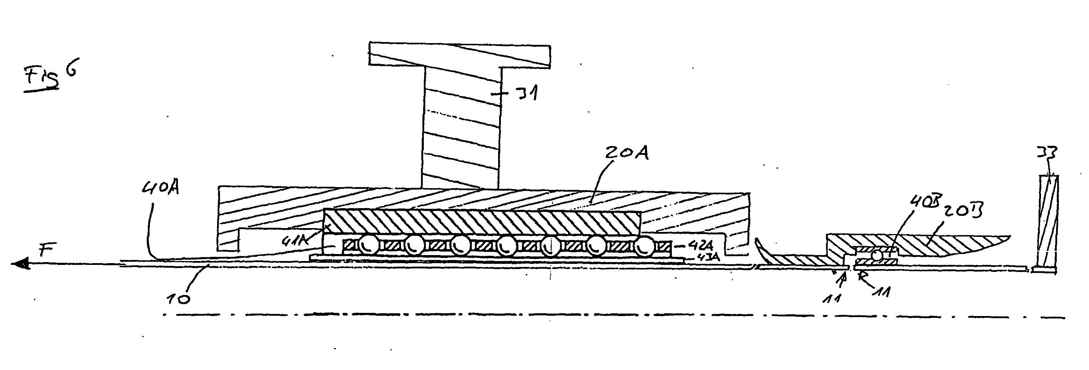

Figur 6 zeigt eine schematische Übersichtszeichung eines erfindungsgemäßen Schutzschlauches 10, der durch eine Rückholfeder (nicht dargestellt) gegen die Dockingplatte 33 durch Zug F unter Spannung gesetzt wird. Der Schutzschlauch 10 wird durch die Manschettenvorrichtung 20A geführt, in der er so von dem Wälzlager 40A gehalten wird, daß eine Bewegung durch den inneren Querschnitt des Wälzlagers 40A, das als Kugelführung mit Außenbuchse 41A, Käfig mit Kugeln 42A und Innenbuchse 43A ausgeführt ist und den Schutzschlauch 10 führt, in Längsrichtung des Schutzschlauches 10 bzw. der Manschettenvorrichtung 20A möglich ist. Eine weitere Ausgestaltung sieht vor, der Schutzschlauch im Bereich 10 zwischen der ortsfesten Manschettenvorrichtung 20A, die an einem Armglied eines Industrieroboters befestigbar ist, eine weitere Manschettenvorrichtung 20B aufweist, die den Schutzschlauch 10 im Bereich einer Unterbrechung 11, 11 umfaßt. Innerhalb der Manschette 20B sind die sich gegenüberliegenden Schlauchabschnittsenden 11 frei gegeneinander drehbar gehalten, nämlich einerseits im Rillenkugellager 40B, andererseits durch Verbindung mit dem Manschettenbauteil 20B.

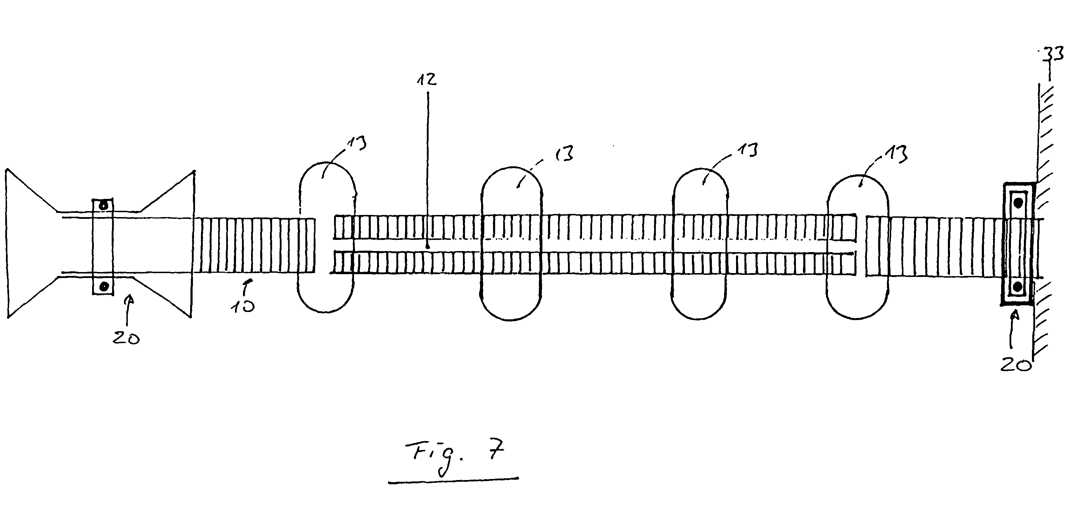

Figur 7 zeigt einen Ausschnitt eines erfindungsgemäßen Schutzschlauches, nämlich einen Schlauchabschnitt, der zwischen zwei Manschettenbauteilen 20 angeordnet ist, wobei der Schlauchabschnitt zumindest in einem Manschettenbauteil 20 axial drehbar gelagert ist. Eines der Manschettenbauteile 20 kann an einer Dockingplatte 33 befestigt sein, so daß die in dem Schutzschlauch geführten Leitungen nach Durchtritt durch eine Öffnung in der Dockingplatte 33 den Schutzschlauch verlassen. Beispielsweise nach Austausch eines Bereiches des Schlauchabschnittes weist der erfindungsgemäße Schutzschlauch einen Bereich auf, in welchem ein Unterabschnitt des Schutzschlauches 10 eine Unterbrechung in Längsrichtung (schematisch dargestellt) beispielsweise in Form eines linearen oder spiralförmig verlaufenden Schlitzes hat. Dieser Bereich des Schutzschlauches ist durch Manschetten 13, beispielsweise sogenannte Protektoren bereichsweise auf seinem Umfang umfaßt, die ein Öffnen der Unterbrechung in Längsrichtung 12 verhindern und auch den Teil des Schutzschlauches 10 mit Unterbrechung in Längsrichtung mit dem umfänglich geschlossenen Teil des Schutzschlauches verbinden. Die aneinander stoßenden Enden des Bereiches des Schutzschlauches 10. der umfänglich geschlossen ist mit dem Bereich des Schutzschlauches, der eine Unterbrechung in Längsrichtung 12 aufweist, können jeweils so angeordnet sein, daß sie sich berührend gegenüberliegen oder aber sich in einem geringen Abstand gegenüberliegen, solange sie durch eine Manschette 13 miteinander verbunden sind.

## Patentansprüche

1. Schutzschlauch (10) zur Aufnahme von Leitungen für einen Industrieroboter mit gegeneinander beweglichen Armgliedern zur Versorgung eines Werkzeuges, das von dem Industrieroboter getragen wird, wobei der Schutzschlauch (10) in mindestens zwei Schlauchabschnitte unterteilt ist, die drehbar miteinander verbunden sind,
**dadurch gekennzeichnet, dass** mindestens einer der Schlauchabschnitte (20) an seinen beiden Schlauchabschnittsenden axial drehbar gelagert ist, so dass die Leitungen bei Bewegung der Armglieder im wesentlichen nicht verdreht werden.

2. Schutzschlauch (10) nach Anspruch 1, **dadurch gekennzeichnet, dass** die axial drehbar gelagerten Schlauchabschnittsenden in mindestens einer Vorrichtung zur örtlichen Befestigung drehbar gelagert sind.

3. Schutzschlauch (10) nach Anspruch 2, **dadurch gekennzeichnet, dass** die Vorrichtung zur örtlichen Befestigung mit einer drehbaren Haltevorrichtung (30) an einem Armglied befestigbar ist.

4. Schutzschlauch (10) nach einem der vorangehenden Ansprüche, **dadurch gekennzeichnet, dass** der Schutzschlauch (10) in der Vorrichtung zur örtlichen Befestigung in mindestens einem Wälzlager (40) gelagert ist.

5. Schutzschlauch (10) nach Anspruch 4, **dadurch gekennzeichnet, dass** das Wälzlager (40) ein axiale und/oder radiale Kräfte aufnehmendes Kugellager, insbesondere eine Rillenkugellager ist.

6. Schutzschlauch (10) nach einem der Ansprüche 2 bis 5, **dadurch gekennzeichnet, dass** das Schlauchabschnittsende (11) von einer Endhülse (21) umfasst ist, die axial drehbar in der Vorrichtung zur örtlichen Befestigung gelagert ist.

7. Schutzschlauch (10) nach einem der vorangehenden Ansprüche, **dadurch gekennzeichnet, dass** der Schutzschlauch mindestens eine weitere, axial um den Schutzschlauch (10) angeordnete Vorrichtung zur örtlichen Befestigung als orts- und lagefeste Befestigungsvorrichtung an eines von mehreren gegeneinander beweglichen Armgliedern des Industrieroboters aufweist.

8. Schutzschlauch (10) nach einem der vorangehenden Ansprüche, **dadurch gekennzeichnet, dass** ein Abschnitt des Schutzschlauches (10) eine Unterbrechung in Längsrichtung (12) aufweist.

9. Schutzschlauch (10) nach Anspruch 8, **dadurch gekennzeichnet, dass** Manschetten (13) den Bereich des Schutzschlauches (10) mit Unterbrechungen in Längsrichtung (12) bereichsweise umfassen und Manschetten (13) gegenüberliegende Abschnitte des Schutzschlauches (10) miteinander verbinden.

10. Schutzschlauch nach einem der vorangehenden Ansprüche, **dadurch gekennzeichnet, dass** der Schutzschlauch (10) sowohl axial drehbar als auch in Richtung seiner Längsachse verschiebbar gelagert ist und eine Rückholvorrichtung den Schutzschlauch (10) gegen die Position einer Dockingplatte (33) unter Zugspannung setzen kann.

11. Verfahren zur Reparatur eines Schutzschlauches zwischen den Lagern, **dadurch gekennzeichnet, dass** ein Schlauchabschnitt oder Unterabschnitt eines Schlauchabschnitts eines Schutzschlauchs nach einem der vorangehenden Ansprüche durch ein Schlauchstück ersetzt wird, das in Längsrichtung eine Unterbrechung aufweist und durch beabstandete Manschetten zusammengehalten wird.

12. Verwendung eines Schutzschlauches (10) nach einem der Ansprüche 1 bis 10 zur Herstellung eines Schlauchpaketes, das in dem Schutzschlauch (10) liegende Leitungen aufweist.

13. Industrieroboter mit gegeneinander beweglichen Armgliedern, **dadurch gekennzeichnet, dass** Leitungen in einem Schutzschlauch (10) nach einem der Ansprüche 1 bis 10 enthalten sind.

14. Industrieroboter nach Anspruch 13, **dadurch gekennzeichnet, dass** der Schutzschlauch (10) in so viele Schlauchabschnitte unterteilt ist, wie das Werkzeug Freiheitsgrade aufweist.

15. Verfahren zum Betreiben eines Industrieroboters mit gegeneinander beweglichen Armgliedern, **dadurch gekennzeichnet, dass** Leitungen in einem Schutzschlauch (10) nach einem der Ansprüche 1 bis 10 geführt werden.

## Claims

1. Protective hose (10) for accommodating conduits for an industrial robot having arm members movable relative to one another for supplying a tool which is carried by the industrial robot, the protective hose (10) being subdivided into at least two hose sections which are rotatably connected to one another, **characterized in that** at least one of the hose sections (20) is mounted in an axially rotatable manner at its two hose section ends, so that the conduits are essentially not twisted during movement of the arm members.

2. Protective hose (10) according to Claim 1, **characterized in that** the hose section ends mounted in an axially rotatable manner are rotatably mounted in at least one device for local fastening.

3. Protective hose (10) according to Claim 2, **characterized in that** the device for local fastening can be fastened to an arm member by means of a rotatable holding device (30).

4. Protective hose (10) according to one of the preceding claims, **characterized in that** the protective hose (10) is mounted in the device for local fastening in at least one rolling-contact bearing (40).

5. Protective hose (10) according to Claim 4, **characterized in that** the rolling-contact bearing (40) is a ball bearing, in particular a deep groove ball bearing, absorbing axial and/or radial forces.

6. Protective hose (10) according to one of Claims 2 to 5, **characterized in that** the hose section end (11) is enclosed by an end sleeve (21) which is mounted in an axially rotatable manner in the device for local fastening.

7. Protective hose (10) according to one of the preceding claims, **characterized in that** the protective hose has at least one further device for locally fastening, as a fixed and stable fastening device, to one of several arm members of the industrial robot which are movable relative to one another, said further device being arranged axially around the protective hose (10).

8. Protective hose (10) according to one of the preceding claims, **characterized in that** a section of the protective hose (10) has an interruption in the longitudinal direction (12).

9. Protective hose (10) according to Claim 8, **characterized in that** collars (13) enclose certain areas of the region of the protective hose (10) having interruptions in the longitudinal direction (12), and collars (13) connect opposite sections of the protective hose (10) to one another.

10. Protective hose according to one of the preceding claims, **characterized in that** the protective hose (10) is mounted in both an axially rotatable manner and a displaceable manner in the direction of its longitudinal axis, and a restoring device can put the protective hose (10) under tensile stress with respect to the position of a docking plate (33).

11. Method of repairing a protective hose between the bearings, **characterized in that** a hose section or bottom section of a hose section of a protective hose according to one of the preceding claims is replaced by a hose piece which has an interruption in the longitudinal direction and is held together by spaced-apart collars.

12. Use of a protective hose (10) according to one of Claims 1 to 10 for producing a hose assembly which has conduits lying in the protective hose (10).

13. Industrial robot having arm members movable relative to one another, **characterized in that** conduits are contained in a protective hose (10) according to one of Claims 1 to 10.

14. Industrial robot according to Claim 13, **characterized in that** the protective hose (10) is subdivided into as many hose sections as corresponds to the degrees of freedom of the tool.

15. Method of operating an industrial robot having arm members movable relative to one another, **characterized in that** conduits are guided in a protective hose (10) according to one of Claims 1 to 10.

## Revendications

1. Tuyau flexible de protection (10) pour recevoir des conduites pour un robot industriel avec des organes de bras mobiles les uns par rapport aux autres pour l'alimentation d'un outil qui est porté par le robot industriel, le tuyau flexible de protection (10) étant divisé en au moins deux segments de tuyau qui sont reliés l'un à l'autre de manière rotative,
**caractérisé en ce qu'**au moins un des segments de tuyau (20) est monté à rotation axiale sur ses deux extrémités de segment de tuyau de sorte que les conduites, lors du déplacement des organes de bras, ne soient pas substantiellement tordues.

2. Tuyau flexible de protection (10) selon la revendication 1, **caractérisé en ce que** les extrémités des segments de tuyau montées à rotation axiale sont montées à rotation dans au moins un dispositif pour la fixation locale.

3. Tuyau flexible de protection (10) selon la revendication 2, **caractérisé en ce que** le dispositif pour la fixation locale peut être fixé avec un dispositif de maintien rotatif (30) sur un organe de bras.

4. Tuyau flexible de protection (10) selon l'une quelconque des revendications précédentes, **caractérisé en ce que** le tuyau flexible de protection (10) est monté dans au moins un palier à roulement (40) dans le dispositif pour la fixation locale.

5. Tuyau flexible de protection (10) selon la revendication 4, **caractérisé en ce que** le palier à roulement (40) est un roulement à billes recevant les forces axiales et/ou radiales, notamment un roulement à billes rainuré.

6. Tuyau flexible de protection (10) selon l'une quelconque des revendications 2 à 5, **caractérisé en ce que** l'extrémité de segment de tuyau (11) est entourée par une gaine d'extrémité (21) qui est montée à rotation axiale dans le dispositif pour la fixation locale.

7. Tuyau flexible de protection (10) selon l'une quelconque des revendications précédentes, **caractérisé en ce que** le tuyau flexible de protection présente au moins un autre dispositif pour la fixation locale disposé axialement autour du tuyau flexible de protection (10), servant de dispositif de fixation fixé en lieu et en position, sur l'un de plusieurs organes de bras mobiles les uns par rapport aux autres du robot industriel.

8. Tuyau flexible de protection (10) selon l'une quelconque des revendications précédentes, **caractérisé en ce qu'**un segment du tuyau flexible de protection (10) présente une interruption dans la direction longitudinale (12).

9. Tuyau flexible de protection (10) selon la revendication 8, **caractérisé en ce que** des manchettes (13) entourent partiellement la région du tuyau flexible de protection (10) ayant des interruptions dans la direction longitudinale (12) et les manchettes (13) relient les segments opposés du tuyau flexible de protection (10) les uns avec les autres.

10. Tuyau flexible de protection selon l'une quelconque des revendications précédentes, **caractérisé en ce que** le tuyau flexible de protection (10) est monté à la fois à rotation axiale et aussi de manière à pouvoir coulisser axialement dans la direction de son axe longitudinal, et un dispositif de rappel peut placer le tuyau flexible de protection (10) sous contrainte de traction contre la position d'une plaque d'amarrage (33).

11. Procédé de réparation d'un tuyau flexible de protection entre les paliers, **caractérisé en ce qu'**un segment de tuyau ou un segment inférieur d'un segment de tuyau d'un tuyau flexible de protection selon l'une quelconque des revendications précédentes est remplacé par un morceau de tuyau qui présente une interruption dans la direction longitudinale et qui est maintenu serré par des manchettes espacées.

12. Utilisation d'un tuyau flexible de protection (10) selon l'une quelconque des revendications 1 à 10 pour la fabrication d'un paquet de tuyaux, qui présente des conduites posées dans le tuyau flexible de protection (10).

13. Robot industriel ayant des organes de bras mobiles les uns par rapport aux autres, **caractérisé en ce que** des conduites sont contenues dans un tuyau flexible de protection (10) selon l'une quelconque des revendications 1 à 10.

14. Robot industriel selon la revendication 13, **caractérisé en ce que** le tuyau flexible de protection (10) est divisé en un nombre de segments de tuyau correspondant aux degrés de liberté de l'outil.

15. Procédé pour faire fonctionner un robot industriel ayant des organes de bras mobiles les uns par rapport aux autres, **caractérisé en ce que** des conduites sont guidées dans un tuyau flexible de protection (10) selon l'une quelconque des revendications 1 à 10.
